(19) Europäisches Patentamt
European Patent Office
Office européen des brevets

(11) **EP 2 451 884 B1**

(12) **FASCICULE DE BREVET EUROPEEN**

(45) Date de publication et mention de la délivrance du brevet:
**05.06.2013 Bulletin 2013/23**

(21) Numéro de dépôt: **10740358.6**

(22) Date de dépôt: **09.07.2010**

(51) Int Cl.:
*C09K 3/14* (2006.01)   *B24B 27/06* (2006.01)
*B28D 5/00* (2006.01)

(86) Numéro de dépôt international:
**PCT/IB2010/053161**

(87) Numéro de publication internationale:
**WO 2011/004352 (13.01.2011 Gazette 2011/02)**

(54) **SUSPENSION DE GRAINS ABRASIFS**

SUSPENSION AUS SCHLEIFKÖRNERN

SUSPENSION OF ABRASIVE GRAINS

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **09.07.2009 FR 0954792**

(43) Date de publication de la demande:
**16.05.2012 Bulletin 2012/20**

(73) Titulaire: **Saint-Gobain Centre De Recherches Et D'etudes Europeen
92400 Courbevoie (FR)**

(72) Inventeurs:
• **POPA, Ana-Maria
F-84300 Cavaillon (FR)**

• **ROSZINSKI, Jan Olaf
N4640 Soegne (NO)**
• **EMANUELSEN, Siv M.
N-4790 Lillesand (NO)**
• **NEUMAN, Fabio
N-4790 Lillesand (NO)**

(74) Mandataire: **Sartorius, Jérome
Cabinet Nony
3, rue de Penthièvre
75008 Paris (FR)**

(56) Documents cités:
**EP-A1- 1 685 927       WO-A2-2009/101339
JP-A- 2003 041 240**

**Description**

**Domaine technique**

La présente invention concerne une suspension de grains abrasifs, notamment destinée à l'usinage de lingots de silicium, un outil abrasif, et notamment un fil abrasif, chargé de cette suspension, et un procédé de sciage d'un lingot mettant en oeuvre une telle suspension ou un tel outil abrasif.

**Etat de la technique**

Classiquement, la fabrication de galettes de silicium, appelées "wafers" en anglais, comporte une étape de sciage en tranches de lingots de silicium. A cet effet, les lingots de silicium sont poussés contre un fil abrasif tournant en boucle en se rechargeant en passant à travers une suspension de grains abrasifs.

Des procedes de sciage de lingots de silicium et des machines utilisables pour mettre en oeuvre ces procédés sont notamment décrits dans US 2006/249134, US 5,937.844 ou WO 2005/095076.

Les galettes de silicium peuvent être destinées à des applications électroniques ou à la fabrication de cellules photovoltaïques. Notamment dans cette dernière application il existe un besoin pour fabriquer des galettes de silicium d'une épaisseur réduite, de l'ordre de 200 $\mu$m, afin de limiter la quantité de silicium nécessaire pour produire un Watt

Il existe également un besoin pour des vitesses de sciage élevées afin d'augmenter la productivité.

Ces contraintes de faible épaisseur et de vitesse de sciage élevée conduisent cependant à des taux de rebut insatisfaisants. En effet, une proportion importante des galettes fabriquées présente des variations d'épaisseur selon leur longueur, des déformations ou des défauts à leur surface. Certaines galettes présentent même des amorces de fissures ou sont brisées lors du sciage.

Des recherches ont donc été engagées afin d'améliorer les performances des suspensions utilisées. En particulier JP 10-180 608 préconise l'utilisation de grains abrasifs sous la forme de plaquettes présentant une épaisseur au plus égale au quart de leur longueur et de leur largeur.

JP 2003-041240 préconise une dispersion des tailles des grains resserrée autour de la taille médiane. JP 2003-041240 précise également que le rapport d'aspect moyen devrait être supérieur ou égal à 0,59. Les grains divulgués dans JP 2003-041240 permettraient de réduire les variations d'épaisseur le long des galettes fabriquées.

Un but de l'invention est de résoudre au moins partiellement un ou plusieurs des problèmes susmentionnés, et en particulier d'améliorer la productivité des procédés de fabrication de galettes de silicium.

**Résumé de l'invention**

L'invention propose une suspension, ou "barbotine", notamment destinée à l'usinage de lingots de silicium, comprenant un ensemble de grains abrasifs et un liant, ladite suspension étant caractérisée en ce que :

- la fraction granulométrique $D_{40}$-$D_{60}$ dudit ensemble de grains abrasifs comporte plus de 15%, plus de 18%, plus de 22%, de préférence plus de 25%, et moins de 80%, moins de 70%, moins de 60%, de préférence moins de 50%, de préférence moins de 40%, en pourcentages volumiques, de grains présentant une circularité inférieure à 0,85, les percentiles $D_{40}$ et $D_{60}$ étant les percentiles de la courbe de distribution granulométrique cumulée des tailles de grains correspondant aux tailles de grains permettant de séparer les fractions constituées des 40% et 60% en pourcentages volumiques, respectivement, des grains présentant les plus grandes tailles, et
- les grains abrasifs représentent plus de 25%, plus de 30%, plus de 35%, plus de 37%, et moins de 49,5% voire moins de 46%, de préférence moins de 45%, de préférence moins de 43% de la masse de ladite suspension.

Comme on le verra plus en détail dans la suite de la description, une suspension selon l'invention est particulièrement performante pour scier des lingots pouvoir l'expliquer théoriquement, les inventeurs ont découvert que les suspensions contenant une proportion élevée de grains allongés parmi les gros grains est avantageuse et que, pour ces suspensions spécifiquement, il existe une plage optimale pour la teneur massique en grains. De manière surprenante, ils ont mis en évidence que cette plage optimale pour la teneur massique est inférieure à celles habituellement préconisées est avantageuse.

Les inventeurs ont aussi découvert que, dans un mode de réalisation préféré de l'invention, une suspension selon l'invention ne génère pas de marques sur les galettes usinées (dues au frottement de l'outil abrasif) et permet un bon renouvellement des grains sur cet outil lors de son rechargement.

Lorsque la taille médiane $D_{50}$ de l'ensemble de grains abrasifs est supérieure à 5 $\mu$m, voire supérieure à 6 $\mu$m et inférieure à 9 $\mu$m, voire inférieure à 8 $\mu$m, les grains abrasifs représentent de préférence plus de 30% et moins de 46% de la masse de ladite suspension.

Lorsque la taille médiane $D_{50}$ de l'ensemble de grains abrasifs est supérieure à 8 $\mu$m, voire supérieure à 9 $\mu$m et inférieure à 12 $\mu$m, voire inférieure à 10 $\mu$m, les grains abrasifs représentent de préférence plus de 35% et moins de 47% de la masse de ladite suspension.

Lorsque la taille médiane $D_{50}$ de l'ensemble de grains abrasifs est supérieure à 12 $\mu$m et inférieure à 20 $\mu$m, voire inférieure à 15 $\mu$m, les grains abrasifs représentent de préférence plus de 31% et moins de 48% de la masse de ladite suspension.

Dans un mode de réalisation, le rapport du pourcentage volumique $S(D_{40}\text{-}D_{60})$ de grains présentant une circularité inférieure à 0,85 dans la fraction granulométrique $D_{40}$-$D_{60}$ dudit ensemble de grains abrasifs divisé par la taille médiane $D_{50}$, ou « rapport $R_{40\text{-}60}$ », est supérieur à 1 et inférieur à 5, de préférence inférieur à 3, voire inférieur à 2,7, la circularité et les percentiles étant tels que définis ci-dessus.

Ce rapport peut être supérieur à 1,5, voire supérieur à 1,7.

Dans un mode de réalisation, l'ensemble de grains abrasifs est tel que :

$$10\% < \Delta_{3\text{-}10\text{-}20} < 60\%,$$

et/ou

$$5\% < \Delta_{10\text{-}20\text{-}40} < 40\%,$$

et/ou

$$20\% < \Delta_{20\text{-}40\text{-}60} < 50\%$$

et/ou

$$0\% < \Delta_{40\text{-}60\text{-}80} < 20\%,$$

et/ou

$$5\% < \Delta_{60\text{-}80\text{-}97} < 40\%,$$

« $\Delta_{n\text{-}m\text{-}p}$ » étant le rapport $(S(D_n\text{-}D_m)\text{-}S(D_m\text{-}D_p)) / S(D_m\text{-}D_p)$ en pourcentage, « $S(D_i\text{-}D_j)$ » étant le pourcentage volumique de grains présentant une circularité inférieure à 0,85 dans la fraction granulométrique $D_i$-$D_j$.

Dans un mode de réalisation,

$$\Delta_{40\text{-}60\text{-}80} < 7\% \;;$$

de préférence

$$20\% < \Delta_{20\text{-}40\text{-}60} < 50\%,$$

et

$$0\% < \Delta_{40\text{-}60\text{-}80} < 20\%, \text{ voire } \Delta_{40\text{-}60\text{-}80} < 7\%.$$

Dans un mode de réalisation

$$5\% < \Delta_{10\text{-}20\text{-}40} < 40\%, \text{ voire } \Delta_{10\text{-}20\text{-}40} < 20\%,$$

et

$$0\% < \Delta_{40\text{-}60\text{-}80} < 20\%, \text{ voire } \Delta_{40\text{-}60\text{-}80} < 7\%.$$

Dans un mode de réalisation préféré :

$$10\% < \Delta_{3\text{-}10\text{-}20} < 60\%,$$

et

$$5\% < \Delta_{10\text{-}20\text{-}40} < 40\%,$$

et

$$20\% < \Delta_{20\text{-}40\text{-}60} < 50\%,$$

et

$$0\% < \Delta_{40\text{-}60\text{-}80} < 20\%,$$

et

$$5\% < \Delta_{60\text{-}80\text{-}97} < 40\%.$$

$\Delta_{3\text{-}10\text{-}20}$ peut être supérieur à 20%, voire supérieur à 25%
$\Delta_{10\text{-}20\text{-}40}$ peut être inférieur à 35%, voire inférieur à 30%, ou inférieur à 25%.
$\Delta_{20\text{-}40\text{-}60}$ peut être supérieur à 15%, voire supérieur à 25%, ou supérieur à 35%.
$\Delta_{40\text{-}60\text{-}80}$ peut être inférieur à 15%, inférieur à 10% ou inférieur à 7%, voire inférieur à 5%.
$\Delta_{60\text{-}80\text{-}97}$ peut être supérieur à 10%, voire supérieur à 15% voire supérieur à 20%,

De préférence, plusieurs de ces conditions sont satisfaites.

De manière très significative, ces conditions permettent de limiter les variations de la proportion de grains allongés d'une fraction granulométrique à la suivante. Les inventeurs ont découvert qu'il en résulte une amélioration des performances lors du sciage des lingots.

Une suspension selon l'invention peut notamment encore présenter une ou plusieurs des caractéristiques optionnelles suivantes :

- La fraction granulométrique $D_{20}$-$D_{40}$ peut comporter plus de 15%, de préférence plus de 20%, voire plus de 25%, en pourcentage volumique, de grains présentant une circularité (C) inférieure à 0,85.
- La fraction granulométrique $D_{10}$-$D_{20}$ peut comporter plus de 15%, de préférence plus de 25% voire plus de 30%, en pourcentage volumique, de grains présentant une circularité (C) inférieure à 0,85.
- La fraction granulométrique $D_3$-$D_{10}$ peut comporter plus de 30%, de préférence plus de 40%, voire plus de 50%, en pourcentage volumique, de grains présentant une circularité (C) inférieure à 0,85.
- La fraction granulométrique $D_{20}$-$D_{40}$ et la fraction granulométrique $D_{40}$-$D_{60}$ peuvent simultanément comporter plus de 15%, plus de 20% et/ou moins de 40%, moins de 35%, en pourcentages volumiques, de grains présentant une circularité inférieure à 0,85.
- La taille médiane $D_{50}$ peut être inférieure à 30 $\mu$m, voire inférieure à 20 $\mu$m et/ou supérieure à 3 $\mu$m, supérieure à 5 $\mu$m, voire supérieure à 8 $\mu$m.
- Le matériau des grains abrasifs peut présenter une microdureté de type Vickers $HV_{0,5}$ supérieure à 7 GPa. Cette microdureté peut être déterminée par une moyenne sur au moins 10 mesures d'empreintes réalisées avec une pointe diamant de base carrée et d'angle au sommet entre faces égal à 136° appliquée sur un échantillon de grains.

- Les grains abrasifs peuvent notamment comporter plus de 95%, de préférence plus 97,5%, de carbure de silicium SiC, en pourcentage massique, le carbure de silicium étant de préférence sous forme cristallisée alpha.

- Les grains abrasifs présentent une surface spécifique de préférence supérieure à 1,0 $m^2/g$, voire supérieure à 1,2 $m^2/g$ pour une taille médiane comprise entre 5 et 15 microns. La surface spécifique est classiquement calculée par la méthode BET (Brunauer Emmet Teller) telle que décrite dans Journal of American Chemical Society 60 (1938), pages 309 à 316.

- L'ensemble de grains abrasifs présente de préférence une teneur massique en oxygène, comprise entre 0,2% et 0,6% et de préférence comprise entre 0,4 à 0,5%. La teneur massique en oxygène est mesurée par méthode LECO.

Dans un mode de réalisation particulier, la taille médiane $D_{50}$ est supérieure à 8 $\mu$m et la fraction granulométrique $D_{40}$-$D_{60}$ comporte plus de 15%, ou plus de 20%, en pourcentage volumique, de grains présentant une circularité inférieure à 0,85.

Le liant est de préférence un liant organique.

De préférence, une suspension selon l'invention présente une viscosité comprise entre 20 et 30 cPas, mesurée au viscosimètre Brookfield « DV-II+ Pro », en utilisant l'aiguille 63 et une vitesse de rotation de 200 RPM (tours par minute).

L'invention concerne encore un outil comportant des grains abrasifs fixés sur un support ou agglomérés les uns aux autres au moyen d'une suspension selon l'invention. L'outil peut en particulier être un fil de support revêtu d'une suspension selon l'invention, par exemple un fil abrasif destiné au sciage de lingots, et notamment de lingots de silicium.

L'invention concerne aussi un procédé d'usinage d'un lingot, et notamment un procédé de sciage d'un lingot au moyen d'un outil selon l'invention, et notamment d'un fil abrasif selon l'invention. Le lingot peut comporter plus de 50%, plus de 80%, plus de 90%, plus de 95%, plus de 99%, plus de 99,9%, voire 100% d'un constituant choisi parmi un matériau semi-conducteur, en particulier le silicium mono ou polycristallin, un arséniure, en particulier l'arséniure de gallium (GaAs), le phosphure d'indium (InP), un oxyde métallique, une ferrite. Le procédé peut être adapté pour obtenir, à l'issue du sciage, une galette d'une épaisseur inférieure à 200 $\mu$m, inférieure à 150 $\mu$m, voire inférieure ou égale à 100 $\mu$m.

De préférence, l'outil est rechargé en passant à travers une suspension selon l'invention.

L'invention concerne également une galette obtenue suivant un procédé d'usinage selon l'invention.

Par ailleurs, les inventeurs ont découvert que la teneur massique en grains abrasifs dans la suspension qui est optimale pour maximaliser la vitesse de sciage dépend de la surface spécifique de la poudre, classiquement mesurée par BET. Plus cette surface spécifique est grande, plus ladite teneur massique doit être élevée.

L'invention concerne donc également un procédé d'usinage d'un lingot, comportant les opérations suivantes :

a. préparation d'une suspension par mélange d'une poudre de grains abrasifs et d'un liant ;
b. usinage dudit lingot au moyen d'un outil abrasif rechargé en passant à travers ladite suspension ;

ce procédé étant remarquable en ce que, pour la préparation de ladite suspension, on ajuste la teneur massique en grains abrasifs dans ladite suspension en fonction de la surface spécifique de ladite poudre.

La suspension peut en particulier être une suspension selon l'invention.

## **Définitions**

- Par « grain », on entend un produit solide individualisé dans une suspension ou fixé sur un support.
- Par souci de clarté, on distingue ici la "poudre" de grains, qui est la matière première particulaire utilisée pour fabriquer une suspension, et "l'ensemble" de grains, qui est constitué des grains dans la suspension. Autrement dit, une poudre devient un ensemble de grains lorsqu'elle est introduite dans la suspension. Bien entendu, la distribution granulométrique d'un ensemble de grains est identique à celle de la poudre correspondante.
- Par souci de clarté, on appelle ici "grain allongé " un grain présentant une circularité inférieure. à 0,85, et "grain arrondi" un grain présentant une circularité supérieure ou égale à 0,85.
- La « circularité » d'un grain est classiquement déterminée de la manière suivante : Les grains sont mis en suspension dans un fluide de manière à éviter toute floculation des grains, c'est-à-dire toute agglomération. Les inventeurs ont par exemple réalisé une suspension dans laquelle une poudre de SiC est dispersée dans de l'eau à l'aide de soude NaOH. D'autres agents dispersants connus pour disperser les particules de SiC pourraient cependant etre utilisés.

Une photographie de la suspension est prise et traitée au moyen d'un appareil de type SYSMEX FPIA 3000.

Pour évaluer la circularité « C » d'un grain, on détermine le périmètre $P_d$ du disque D présentant une aire égale à l'aire $A_p$ du grain G sur la photographie (voir la figure 1). On détermine par ailleurs le périmètre $P_p$ de ce grain. La circularité est égale au rapport de $P_d/P_p$. Ainsi $C = \dfrac{2 * \sqrt{\pi A_p}}{P_p}$. Plus le grain est de forme allongée, plus la circularité est faible.

Le manuel d'utilisation du SYSMEX FPIA 3000 décrit également cette procédure (voir « detailed specification sheets » sur www.malvern.co.uk).

- On appelle classiquement « courbe de distribution granulométrique cumulée des tailles de grains de l'ensemble des grains d'une suspension», la courbe de distribution granulométrique donnant :

    - en ordonnées, des pourcentages tels qu'un pourcentage cumulé de p% représente la fraction de cet ensemble regroupant les *p*%, en volume, des grains présentant les tailles les plus grandes, et
    - en abscisses, les tailles de grain $D_p$, $D_p$ étant la plus petite taille de grains possible dans la fraction représentée par le pourcentage cumulé *p*% en ordonnées.

Une telle courbe granulométrique peut être réalisée à l'aide d'un granulomètre laser. Un dispositif SYSMEX FPIA 3000® permet avantageusement d'obtenir de telles courbes. Dans les exemples ci-dessous, les tailles ont été déterminées avec un tel dispositif.

On appelle classiquement « percentile » ou « centile » $D_p$ la taille de grain (en abscisses sur la courbe susmentionnée) correspondant au pourcentage, en volume, de *p*% en ordonnées. Par exemple, 10%, en volume, des grains ont une taille supérieure ou égale à $D_{10}$ et 90% des grains, en volume, ont une taille strictement inférieure à $D_{10}$. On appelle classiquement "taille médiane" le percentile $D_{50}$.

On désigne par « $D_p$-$D_q$ » la fraction granulométrique comprenant tous les grains présentant une taille supérieure ou égale à $D_q$ et inférieure ou égale à $D_p$. On désigne par « S(Dp-Dq) » le pourcentage volumique de grains allongés dans la fraction granulométrique $D_p$-$D_q$.

On désigne par « $\Delta_{n-m-p}$ » le rapport $(S(D_n$-$D_m)$-$S(D_m$-$D_p)) / S(D_m$-$D_p)$ en pourcentage. Par exemple $\Delta_{3\ 10\ 20}$ = $(S(D_3$-$D_{10})$-$S(D_{10}$-$D_{20}))$ /$S(D_{10}$-$D_{20})$. $\Delta_{n-m-p}$ indique donc la croissance relative de la proportion de grains allongés de la fraction granulométrique $D_n$-$D_m$ à la fraction granulométrique $D_m$-$D_p$.

On désigne par « suspension », un liquide contenant une poudre dispersée de manière sensiblement homogene, une suspension pouvant optionnellement contenir un agent dispersant

## Brève description des figures

D'autres caractéristiques et avantages de l'invention apparaîtront encore à la lecture de la description qui va suivre et à l'examen du dessin, dans lequel la figure 1 illustre la méthode utilisée pour déterminer la circularité des grains.

## Description détaillée

### Procédé de fabrication

Tous les procédés connus pour fabriquer des grains abrasifs peuvent être utilisés afin de fabriquer des grains arrondis et des grains allongés. Pour fabriquer des grains allongés, on peut notamment se référer à la description de JP 2003-041240.

En fonction de la proportion de grains allongés fabriqués, des étapes de classification, de tri, par exemple par tamisage, ou de mélange de différentes fractions granulométriques peuvent être nécessaires afin d'obtenir des proportions de grains allongés correspondant à celles d'un ensemble de grains d'une suspension selon l'invention.

Une poudre pouvant servir à la fabrication d'une suspension selon l'invention, ci-après "poudre de base", peut par exemple être fabriquée suivant un procédé comportant au moins les étapes suivantes :

a) synthèse d'un corps massif, de préférence au moins millimétrique, c'est-à-dire dont toutes les dimensions dépassent au moins 1 mm, de préférence par réaction, notamment par carboréduction, par exemple par carboréduction de la silice afin de produire du carbure de silicium (SiC), frittage sous pression (« IP »), pressage isostatique à chaud (« HIP »), SPS (« Spark Plasma Sintering » ou frittage flash), ou encore par fusion, notamment par électrofusion ;
b) réduction éventuelle dudit corps massif en un ensemble de particules, éventuellement par concassage ;

c) de préférence, sélection, par exemple par tamisage, des particules présentant une taille supérieure à la taille maximale des grains $D_{0,5}$ de la poudre à fabriquer et, de préférence, sélection des particules présentant une taille au moins 2 fois supérieure à cette taille maximale et/ou inférieure à 4 fois cette taille maximale ;

d) broyage du corps massif obtenu à l'étape a) ou des particules obtenues à l'étape b) ou à l'étape c), de préférence dans des conditions favorisant les contraintes de cisaillement, en particulier au moyen d'un broyeur à rouleaux;

e) le cas échéant, sélection de grains issus de l'étape d) et appartenant à des plages granulométriques déterminées de manière que la poudre obtenue puisse constituer un ensemble de grains d'une suspension conforme à l'invention ;

f) optionnellement, déferrage afin d'éliminer les éventuelles particules magnétiques introduites lors du broyage réalisé à l'étape d) ;

g) optionnellement, traitement thermique ou chimique permettant l'élimination d'espèces chimiques indésirables, par exemple la silice ou un excès de carbone dans le cas d'une poudre de carbure de silicium (SiC) ;

h) optionnellement, vérification de la qualité de la poudre, de préférence par échantillonnage.

A l'étape a), l'objectif est de fabriquer des corps massifs présentant une résistance suffisante pour « éclater » lors du broyage. Autrement dit, il ne faut pas que les corps massifs préparés soient de simples agglomérations de grains susceptibles de s'effriter lors du broyage, un tel effritement ne permettant pas d'obtenir suffisamment de grains allongés pour une exploitation industrielle. Tous les procédés de synthèse sont envisageables, de simples essais permettant de rechercher les conditions les plus favorables.

A l'étape b), optionnelle, les corps massifs sont réduits, par exemple concassés, de façon à augmenter la quantité de particules susceptibles d'être sélectionnées lors de l'étape optionnelle c).

L'étape c), optionnelle, a pour objectif de garantir qu'après éclatement des particules introduites dans le broyeur, les grains obtenus en sortie du broyeur présenteront des tailles suffisantes pour que la poudre reste relativement grossière.

A cet effet, il est préférable que la taille minimale des corps massifs ou des particules entrant dans le broyeur soit au moins deux fois supérieure à la taille maximale des grains de la poudre à fabriquer.

A l'étape d), on utilise un broyeur favorisant les contraintes de cisaillement, de préférence un broyeur à rouleaux.

Les broyeurs par attrition ne sont pas considérés comme adaptés pour fabriquer efficacement une quantité élevée de grains allongés.

Dans le cas d'un broyeur à rouleaux, l'écartement des rouleaux peut être réglé pour modifier la distribution granulométrique et la proportion des grains allongés.

Une étape supplémentaire e), optionnelle si la poudre obtenue à l'issue de l'étape d) est satisfaisante, peut être ensuite mise en oeuvre afin de sélectionner les plages granulométriques préférées. Cette étape peut comprendre une classification, de préférence par élutriation, c'est-à-dire par séparation selon la densité par agitation dans de l'eau. Cette technique est en effet bien adaptée à la granulométrie fine des grains.

Une étape optionnelle f) peut également être mise en oeuvre afin d'éliminer par déferrage les particules magnétiques notamment introduites lors de l'étape d). De préférence, cette étape est réalisée à l'aide d'un déferreur à haute intensité.

Le cas échéant, dans une étape ultérieure optionnelle h), la qualité de la poudre obtenue suite au broyage est vérifiée, de préférence par échantillonnage, par exemple au microscope, au microscope électronique à balayage ou par tout moyen connu permettant de contrôler la forme des grains.

A l'issue de ce procédé, on obtient une poudre de base de grains abrasifs.

Poudre de base

Les grains abrasifs sont de préférence en un matériau présentant une microdureté Vickers $HV_{0,5}$ supérieure à 7 GPa.

La nature des grains abrasifs peut être notamment celle des grains abrasifs utilisés jusqu'à aujourd'hui comme matériaux de polissage ou de sciage. En particulier, les grains peuvent être en un matériau choisi dans le groupe constitué par le carbure de silicium, l'oxyde de cérium, le diamant, le nitrure de bore, l'alumine, la zircone, la silice et des combinaisons d'un ou plusieurs de ces matériaux. De tels grains abrasifs sont disponibles dans le commerce. A titre d'exemple, on peut citer le carbure de silicium GC™ (Green Silicon Carbide) et C™ (Black Silicon Carbide) fabriqués par FUJIMI Inc ou SIKA™ fabriqués par Saint-Gobain Materials à Lillesand en Norvège. Les poudres d'alumine peuvent être choisies par exemple parmi FO (Fujimi Optical Emery), A (Regular Fused Alumina), WA (White Fused Alumina) et PWA (Platelet Calcined Alumina) fabriquées par FUJIMI Inc.

Des grains de carbure de silicium sont particulièrement avantageux.

Dans un mode de réalisation préféré, les grains abrasifs comportent plus de 95%, voire plus de 97,5% de carbure de silicium, en pourcentage massique. Les derniers 2,5% peuvent être des impuretés. Par « impuretés », on entend les constituants inévitables, introduits nécessairement avec les matières premières lors de la fabrication des grains. En particulier les composés faisant partie du groupe des oxydes, nitrures, oxynitrures, carbures, oxycarbures, carbonitrures et espèces métalliques de sodium et autres alcalins, fer, vanadium et chrome sont généralement des impuretés. A titre d'exemples, on peut citer CaO, $Fe_2O_3$ ou $Na_2O$.

Les grains de carbure de silicium présentent de préférence une densité supérieure à 3,0. De préférence, le carbure de silicium est cristallisé sous forme alpha.

Dans un mode de réalisation, le percentile $D_{20}$ est supérieur à 9 $\mu$m, supérieur à 11 $\mu$m, et/ou inférieur à 15 $\mu$m, inférieur à 14 $\mu$m, voire inférieur à 13 $\mu$m.

Le percentile $D_{40}$ peut être supérieur à 5 $\mu$m, voire supérieur à 8 $\mu$m et/ou être inférieur à 20 $\mu$m, voire inférieur à 15 $\mu$m, ou inférieur à 10$\mu$m.

La taille médiane $D_{50}$ peut être inférieure à 30 $\mu$m, inférieure à 20 $\mu$m, inférieure à 15 $\mu$m et/ou supérieure à 1 $\mu$m, supérieure à 3 $\mu$m, supérieure à 5 $\mu$m, supérieure à 7 $\mu$m, voire supérieure à 9$\mu$m.

Suspension

Une suspension résulte classiquement d'un mélange d'une poudre de base dans un liant liquide.

Le liant permet de fixer les grains abrasifs sur un support, et en particulier sur un fil de support destiné au sciage de lingots, et notamment de lingots de silicium. Cette fixation peut être rigide, ou au contraire, classiquement, laisser une possibilité de mobilité des grains les uns par rapport aux autres.

Le liant est de préférence un liant organique. Le liant peut comporter de l'eau, un matériau de base et un ou plusieurs additifs.

La quantité d'eau est de préférence comprise entre 10 et 75% en masse par rapport à la masse de la suspension.

Le matériau de base peut être choisi parmi les hydroxydes de métaux alcalins, comme l'hydroxyde de lithium, l'hydroxyde de sodium et l'hydroxyde de potassium, les hydroxydes d'alcalino-terreux, tels que l'hydroxyde de magnésium, l'hydroxyde de calcium et l'hydroxyde de baryum, et des combinaisons de ces différents matériaux. La teneur de ce matériau de base est classiquement comprise entre 3,5% et 20% en masse par rapport à la masse totale liquide de la suspension.

Parmi les additifs, on utilise généralement au moins un lubrifiant.

Un lubrifiant peut être notamment choisi parmi un polyéthylène glycol, le benzotriazol, l'acide oléique et des mélanges de ces derniers. Un lubrifiant peut être par exemple du Rikamultinole fabriqué par la société Rikashokai ou le Lunacoolant fabriqué par Daichikagaku. La teneur en lubrifiant est de préférence comprise entre 0 et 50% en masse par rapport à la masse de la suspension.

Le liant peut comporter un polymère ou un copolymère formé de monomères d'éthylène glycol, de préférence un polyéthylène glycol. D'autres liants organiques tel que le PVA ou le PMMA peuvent convenir dès lors qu'ils peuvent être sous forme liquide ou mis en solution.

La suspension peut être fabriquée en mélangeant simplement les matières premières susmentionnées. Un procédé de fabrication d'une suspension est notamment décrit dans US 2006/0 249 134.

Outils

Pour le sciage de lingots de silicium, la suspension est classiquement disposée sur un fil de support présentant par exemple une épaisseur comprise entre 100 et 200 $\mu$m.

Le fil de support peut notamment être constitué en acier dur ou en un alliage tel qu'un alliage nickel chrome ou un alliage fer nickel ou en un métal présentant un point de fusion élevé tel que le tungstène ou le molybdène, ou être en fibres de polyamide.

Procédé d'usinage

Suivant un procédé classique de sciage, comme expliqué en introduction, un fil abrasif, guidé par des galets, tourne en boucle en passant à travers une suspension afin de se recharger en grains abrasifs. Il frotte sur un lingot à scier, typiquement de l'ordre de 200 mm de longueur et diamètre, de manière à découper une tranche, ou « galette », de ce lingot.

Le lingot peut en particulier être un lingot de silicium polycristallin de pureté supérieure à 99,99% en masse.

Suivant un mode de réalisation du procédé d'usinage selon l'invention, la galette est sciée de manière à présenter une épaisseur inférieure à 200 $\mu$m, inférieure à 180 $\mu$m, inférieure à 150 $\mu$m, inférieure à 130 $\mu$m, inférieure à 120 $\mu$m, voire inférieure à 100 um.

**Essais**

Différentes suspensions de grains de carbure de silicium ont été testées.

Les tableaux suivants caractérisent les poudres de grains utilisées pour fabriquer ces suspensions.

S% désigne le pourcentage volumique de grains allongés dans les différentes tranches granulométriques.

N% désigne le pourcentage en nombre de grains allongés dans les différentes tranches granulométriques.

Tableau 1

| Percentile ($\mu$m) | | |
|---|---|---|
| Exemple | P1 | P2 |
| $D_{97}$ | 5,2 | 6,2 |
| $D_{80}$ | 6,9 | 7,8 |
| $D_{60}$ | 8,5 | 9,3 |
| $D_{50}$ | 9,2 | 10 |
| $D_{40}$ | 9,9 | 10,7 |
| $D_{20}$ | 11,8 | 12,4 |
| $D_{10}$ | 13,5 | 13,6 |
| $D_3$ | 16,2 | 15,6 |

Tableau 2

| S% | | |
|---|---|---|
| | P1 | P2 |
| $D_{80}$-$D_{97}$ | 18.6 | 8,6 |
| $D_{60}$-$D_{80}$ | 22,8 | 8,9 |
| $D_{40}$-$D_{60}$ | 23,7 | 9,6 |
| $D_{20}$-$D_{40}$ | 32,7 | 12,7 |
| $D_{10}$-$D_{20}$ | 38,5 | 15,1 |
| $D_3$-$D_{10}$ | 52,6 | 29,2 |

Tableau 3

| Exemple | Fraction | N% |
|---|---|---|
| P1 | $D_3$-$D_{10}$ | 1,8 |
| | $D_{20}$-$D_{40}$ | 6,9 |
| | $D_{40}$-$D_{60}$ | 10,4 |
| P2 | $D_3$-$D_{10}$ | 2,4 |
| | $D_{20}$-$D_{40}$ | 6,6 |
| | $D_{40}$-$D_{60}$ | 12,0 |

Tableau 4

| Exemple | Fraction | $D_{50}$ ($\mu$m) | R = S% / $D_{50}$ | $R_{40-60}$ = S($D_{40}$-$D_{60}$)/$D_{50}$ |
|---|---|---|---|---|
| P1 | $D_{40}$-$D_{60}$ | 9,2 | 2,57 | 2,57 |
| | $D_{20}$-$D_{40}$ | | 3,55 | |

(suite)

| Exemple | Fraction | $D_{50}$ ($\mu$m) | $R = S\% / D_{50}$ | $R_{40-60} = S(D_{40}\text{-}D_{60})/D_{50}$ |
|---------|----------|-------------------|--------------------|----------------------------------------------|
| P2 | $D_{40}\text{-}D_{60}$ $D_{20}\text{-}D_{40}$ | 10 | 0,96 1,27 | 0,96 |

Tableau 5

| Exemple | $\Delta_{3\text{-}10\text{-}20}$ | $\Delta_{10\text{-}20\text{-}10}$ | $\Delta_{20\text{-}40\text{-}60}$ | $\Delta_{40\text{-}60\text{-}80}$ | $\Delta_{60\text{-}80\text{-}97}$ |
|---------|------|------|------|------|------|
| P1 | 36,6 | 17,7 | 37,9 | 3,9 | 22,5 |
| P2 | 93,4 | 18,9 | 32,3 | 7,8 | 3,4 |

Les exemples ont été réalisés à partir de différentes suspensions préparées à partir de ces poudres, d'une manière similaire à celle de l'exemple décrit dans JP 2003-041240. Le liant est du polyéthylène glycol, de masse moléculaire 200 fourni par VWR. Différentes quantités de poudre ont été ajoutées au liant. Le tableau 6 fournit la teneur massique en grains des différentes suspensions ainsi obtenues, en pourcentage sur la base de la masse de la suspension. Les suspensions ont ensuite été utilisées pour scier un lingot de silicium, suivant le protocole décrit dans l'exemple de JP 2003-041240.

La vitesse d'usinage du lingot de silicium par le fil abrasif (qui frotte sur le lingot dans un plan perpendiculaire à la direction de l'avancement du lingot de silicium), c'est-à-dire le nombre de lingots sciés par unité de temps, a été mesurée, chaque fois dans les mêmes conditions.

Les vitesses obtenues avec les différentes suspensions ont été comparées à la vitesse obtenue avec la suspension de l'exemple "Réf. 2' ". Le rapport entre la vitesse obtenue avec une suspension et la vitesse obtenue avec la suspension de l'exemple de la "Réf. 2' ", appelé "gain G' ", permet notamment de mesurer l'impact de la poudre de grains utilisée (P1 ou P2) et de la teneur massique en grains.

Résultats

Les résultats obtenus sont résumés dans le tableau 6 suivant :

Tableau 6

| Poudre | Exemple | Teneur massique en grains | G' (%) |
|--------|---------|---------------------------|--------|
| P1 | Ref 1 | 30 | 93 |
| | 1 | 37 | 112 |
| | 2 | 43 | 113 |
| | 3 | 45 | 105 |
| | Ref 2 | 50 | 85 |
| P2 | Ref 1' | 30 | 99 |
| | 1' | 37 | 103 |
| | 2' | 43 | 104 |
| | 3' | 45 | 103 |
| | Ref 2' | 50 | 100 |

Les résultats obtenus montrent que les performances des suspensions selon l'invention testées sont supérieures à celles obtenues avec des suspensions de référence à teneurs massiques en grains plus faibles ou plus élevées. Une suspension selon l'invention fabriquée à partir d'une poudre de grains allongés de type P1 présente de meilleures performances qu'une suspension fabriquée à partir d'une poudre P2.

Une suspension selon l'invention permet ainsi une vitesse de sciage élevée, c'est-à-dire une bonne productivité, mais aussi la fabrication de galettes, notamment de silicium, d'une épaisseur très fine, et notamment inférieure à 180 $\mu$m, voire inférieure à 150 $\mu$m, voire de l'ordre de 100 $\mu$m, avec un taux de rebut faible.

Les suspensions selon les exemples 1 et 2 sont considérées comme préférées entre toutes, la vitesse de sciage étant maximale pour ces exemples.

Comme cela apparaît clairement à présent, l'invention fournit une suspension particulièrement performante pour découper des galettes de silicium. Avec une suspension selon l'invention, il est ainsi notamment possible de fabriquer des cellules photovoltaïques présentant un rendement entre la quantité d'énergie électrique générée et la quantité de silicium utilisée particulièrement intéressant.

Bien entendu, l'invention n'est cependant pas limitée aux modes de réalisation décrits ci-dessus, fournis à titre d'exemples illustratifs.

En particulier, une suspension selon l'invention pourrait être utilisée dans d'autres applications qu'un fil abrasif. Elle pourrait notamment être utilisée pour fabriquer d'autres outils de sciage ou, plus généralement, d'autres outils d'usinage.

## Revendications

1. Suspension comprenant un ensemble de grains abrasifs et un liant, ladite suspension étant **caractérisée en ce que** :

   - la fraction granulométrique $D_{40}$-$D_{60}$ dudit ensemble de grains abrasifs comporte plus de 15% et moins de 80%, en pourcentages volumiques, de grains présentant une circularité inférieure à 0,85, les percentiles $D_{40}$ et $D_{60}$ étant les percentiles de la courbe de distribution granulométrique cumulée des tailles de grains correspondant aux tailles de grains permettant de séparer les fractions constituées des 40% et 60% en pourcentages volumiques, respectivement, des grains présentant les plus grandes tailles, et
   - les grains abrasifs représentent plus de 25% et moins de 46% de la masse de ladite suspension.

2. Suspension selon la revendication précédente, dans laquelle la fraction granulométrique $D_{40}$-$D_{60}$ dudit ensemble de grains abrasifs comporte moins de 40% de grains présentant une circularité inférieure à 0,85, en pourcentage volumique.

3. Suspension selon l'une quelconque des revendications précédentes, dans laquelle les grains abrasifs représentent plus de 37% et moins de 43% de la masse de ladite suspension.

4. Suspension selon l'une quelconque des revendications précédentes, dans laquelle le rapport $R_{40-60}$ du pourcentage volumique de grains présentant une circularité inférieure à 0,85 dans la fraction granulométrique $D_{40}$-$D_{60}$ divisé par la taille médiane $D_{50}$ est supérieur à 1 et inférieur à 5.

5. Suspension selon la revendication précédente, dans laquelle le rapport $R_{40-60}$ du pourcentage volumique de grains présentant une circularité inférieure à 0,85 dans la fraction granulométrique $D_{40}$-$D_{60}$ divisé par la taille médiane $D_{50}$ est supérieur à 1,5 et inférieur à 3.

6. Suspension selon l'une quelconque des revendications précédentes, dans laquelle :

$$25\% < \Delta_{20\text{-}40\text{-}60} < 50\%$$

et/ou

$$0\% < \Delta_{40\text{-}60\text{-}80} < 20\%,$$

   « $\Delta_{n\text{-}m\text{-}p}$ » étant le rapport $(S(D_n\text{-}D_m)\text{-}S(D_m\text{-}D_p)) / S(D_m\text{-}D_p)$ en pourcentage,
   « $S(D_i\text{-}D_j)$ » étant le pourcentage volumique de grains présentant une circularité inférieure à 0,85 dans la fraction granulométrique $D_i$-$D_j$.

7. Suspension selon l'une quelconque des revendications précédentes, dans laquelle la fraction granulométrique $D_{20}$-$D_{40}$ comporte plus de 15%, en pourcentage volumique, de grains présentant une circularité inférieure à 0,85.

8. Suspension selon l'une quelconque des revendications précédentes, dans laquelle la fraction granulométrique $D_{10}$-$D_{20}$ comporte plus de 15%, en pourcentage volumique, de grains présentant une circularité inférieure à 0,85.

9. Suspension selon l'une quelconque des revendications précédentes, dans laquelle la fraction granulométrique $D_3$

-D$_{10}$ comporte plus de 30% et/ou la fraction granulométrique D$_{40}$ - D$_{60}$ comporte moins de 50%, en pourcentage volumique, de grains présentant une circularité inférieure à 0,85.

10. Suspension selon l'une quelconque des revendications précédentes, dans laquelle la taille médiane D$_{50}$ est supérieure à 3 μm et/ou inférieure à 30 μm.

11. Suspension selon l'une quelconque des revendications précédentes, dans laquelle lesdits grains abrasifs sont en un matériau choisi dans le groupe constitué par le carbure de silicium, l'oxyde de cérium, le diamant, le nitrure de bore, l'alumine, la zircone, la silice et des combinaisons d'un ou plusieurs de ces matériaux.

12. Suspension selon l'une quelconque des revendications précédentes, présentant une viscosité comprise entre 20 et 30 cPas, mesurée au viscosimètre Brookfield « DV-II+ Pro », en utilisant l'aiguille 63 et une vitesse de rotation de 200 RPM.

13. Fil abrasif destiné au sciage de blocs, notamment de blocs de silicium, comportant des grains abrasifs fixés sur un support ou agglomérés les uns aux autres au moyen d'une suspension selon l'une quelconque des revendications précédentes.

14. Procédé de sciage d'un bloc à base de silicium au moyen d'un fil abrasif selon la revendication précédente, adapté de manière à obtenir, à l'issue dudit sciage, une galette d'une épaisseur inférieure à 200 μm.

15. Procédé d'usinage d'un lingot, comportant les opérations suivantes :

   a. préparation d'une suspension par mélange d'une poudre de grains abrasifs et d'un liant ;
   b. usinage dudit lingot au moyen d'un outil abrasif rechargé en passant à travers ladite suspension ;

   **caractérisé en ce que**, pour la préparation de ladite suspension, on ajuste la teneur massique en grains abrasifs dans ladite suspension en fonction de la surface spécifique de ladite poudre, la suspension étant conforme à l'une quelconque des revendications 1 à 12.


**Patentansprüche**

1. Suspension, die eine Anzahl von Schleifkörnern und ein Bindemittel enthält, wobei die Suspension **dadurch gekennzeichnet ist, dass**:

   - der granulometrische Anteil D$_{40}$-D$_{60}$ dieser Anzahl von Schleifkörnern mehr als 15% und weniger als 80%, in Volumenprozenten, von Körnern, die eine Rundheit von kleiner als 0,85 aufweisen, enthält, wobei die Prozentanteile D$_{40}$ und D$_{60}$ die Prozentanteile der granulometrischen kumulierten Verteilungskurve der Körnergrößen sind, die den Körnergrößen entsprechen, die es erlauben, die Anteile, die jeweils von 40% und 60% in Volumenprozenten gebildet sind, von den Körnern zu trennen, die die größten Größen darstellen, und
   - die Schleifkörner mehr als 25 % und weniger als 46% der Masse besagter Suspension darstellen.

2. Suspension nach dem vorhergehenden Anspruch, in welcher der granulometrische Anteil D$_{40}$-D$_{60}$ der Anzahl der Schleifkörner weniger als 40% der Körner enthält, die eine Rundheit von weniger als 0,85 in Volumenprozenten aufweisen.

3. Suspension nach einem der vorhergehenden Ansprüche, in welcher die Schleifkörner mehr als 37% und weniger als 43% der Suspensionsmasse ausmachen.

4. Suspension nach einem der vorhergehenden Ansprüche, in welcher das Verhältnis R$_{40-60}$ des Volumenprozentanteils der Körner, die eine Rundheit von weniger als 0,85 im granulometrischen Anteil D$_{40}$-D$_{60}$ aufweisen, geteilt durch die mittlere Größe D$_{50}$, größer als 1 und kleiner als 5 ist.

5. Suspension nach dem vorhergehenden Anspruch, in welcher das Verhältnis R$_{40-60}$ des Volumenprozentanteils der Körner, die eine Rundheit von kleiner als 0,85 in der granulometrischen Fraktion D$_{40}$-D$_{60}$ aufweisen, dividiert durch die mittlere Größe D$_{50}$ größer als 1,5 und kleiner als 3 ist.

**6.** Suspension nach einem der vorhergehenden Ansprüche, in welcher:

$$25\% < \Delta_{20\text{-}40\text{-}60} < 50\%,$$

und/oder

$$0\% < \Delta_{40\text{-}60\text{-}80} < 20\%,$$

wobei

"$\Delta_{n\text{-}m\text{-}p}$" das Verhältnis $(S(D_n\text{-}D_m) - S(D_m\text{-}D_p))/S(D_m\text{-}D_p)$ in Prozenten ist,
"$S(D_i\text{-}D_j)$" der Volumenprozentanteil der Körner ist, die eine Rundheit von kleiner 0,85 in der granulometrischen Fraktion $D_i\text{-}D_j$ aufweisen.

**7.** Suspension nach einem der vorhergehenden Ansprüche, in welcher der granulometrische Anteil $D_{20}\text{-}D_{40}$ mehr als 15% in Volumenprozenten der Körner beinhaltet, die eine Rundheit von kleiner als 0,85 aufweisen.

**8.** Suspension nach einem der vorhergehden Ansprüche, in welcher der granulometrische Anteil $D_{10}\text{-}D_{20}$ mehr als 15% in Volumenprozenten der Körner beinhaltet, die eine Rundheit von weniger als 0,85 aufweisen.

**9.** Suspension nach einem der vorhergehenden Ansprüche, in welcher der granulometrische Anteil $D_3\text{-}D_{10}$ mehr als 30% und/oder die granulometrische Fraktion $D_{40}\text{-}D_{60}$ weniger als 50% in Volumenprozenten der Körner beinhaltet, die eine Rundheit von weniger als 0,85 aufweisen.

**10.** Suspension nach einem der vorhergehenden Ansprüche, in welcher die mittlere Größe $D_{50}$ größer als 3$\mu$m und/ oder kleiner als 30$\mu$m ist.

**11.** Suspension nach einem der vorhergehenden Ansprüche, in der die Schleifkörner aus einem Material bestehen, welches aus der Gruppe ausgewählt ist, die aus Siliziumkarbid, Ceriumoxid, Diamant, Bornitrid, Aluminiumoxid, Zirkonoxid, Siliziumoxid und Kombinationen von einem oder mehreren dieser Materialien bestehen.

**12.** Suspension nach einem der vorhergehenden Ansprüche, welche eine Viskosität zwischen 20 und 30 cPas aufweist, gemessen mit dem Viskosimeter Brookfield "DV-II+ Pro" unter Benutzung der Nadel 63 und einer Rotationsgeschwindigkeit von 200 RPM.

**13.** Schleiffaden bestimmt zum Sägen von Blöcken, insbesondere von Siliciumblöcken, welcher aus auf einem Träger fixierten oder aus die einen mit den anderen mittels einer Suspension nach einem der vorhergehenden Ansprüche agglomerierten Schleifkörnern gebildet ist.

**14.** Verfahren zum Sägen eines Blocks auf der Basis von Silicium mittels eines Schleiffadens nach dem vorhergehenden Anspruch derart, dass am Ende des Sägevorgangs eine Scheibe mit einer Dicke von weniger als 200 $\mu$m gehalten wird.

**15.** Verfahren zur Benutzung eines Blocks, welches folgende Arbeitsschritte beinhaltet:

a. Zubereitung einer Suspension durch Mischung eines Pulvers aus Schleifkörnern und eines Bindemittels;
b. Benutzung dieses Blocks mittels eines Schleifwerkzeugs, welches während des Durchganges durch die Suspension beladen wird;

**dadurch gekennzeichnet, dass** für die Zubereitung dieser Suspension der Massengehalt an Schleifkörnern in dieser Suspension als Funktion der spezifischen Oberfläche des Pulvers eingestellt wird, wobei die Suspension mit einem der Ansprüche 1 bis 12 konform ist.

**Claims**

1. A suspension comprising an assembly of abrasive grains and a binder, said suspension being **characterized in that**:

   - the $D_{40}$-$D_{60}$ particle size fraction of said assembly of abrasive grains comprises more than 15% and less than 80%, as volume percentages, of grains having a circularity of less than 0.85, the $D_{40}$ and $D_{60}$ percentiles being the percentiles of the cumulative particle size distribution curve of the grain sizes corresponding to the grain sizes that make it possible to separate the fractions constituted of 40% and 60%, as volume percentages, respectively, of the grains having the largest sizes; and
   - the abrasive grains represent more than 25% and less than 46% of the mass of said suspension.

2. The suspension as claimed in the preceding claim, wherein the $D_{40}$-$D_{60}$ particle size fraction of said assembly of abrasive grains comprises less than 40% of grains having a circularity of less than 0.85, as a volume percentage.

3. The suspension as claimed in any one of the preceding claims, wherein the abrasive grains represent more than 37% and less than 43% of the mass of said suspension.

4. The suspension as claimed in any one of the preceding claims, wherein the ratio $R_{40\text{-}60}$ of the volume percentage of grains having a circularity of less than 0.85 in the $D_{40}$-$D_{60}$ particle size fraction divided by the median size $D_{50}$ is greater than 1 and less than 5.

5. The suspension as claimed in the preceding claim, wherein the ratio $R_{40\text{-}60}$ of the volume percentage of grains having a circularity of less than 0.85 in the $D_{40}$-$D_{60}$ particle size fraction divided by the median size $D_{50}$ is greater than 1.5 and less than 3.

6. The suspension as claimed in any one of the preceding claims, wherein:

$$25\% < \Delta_{20\text{-}40\text{-}60} < 50\%$$

and/or

$$0\% < \Delta_{40\text{-}60\text{-}80} < 20\%,$$

"$\Delta_{n\text{-}m\text{-}p}$" being the ratio $(S(D_n\text{-}D_m)\text{-}5(D_m\text{-}D_p)) / S(D_m\text{-}D_p)$ as a percentage, "$S(D_i\text{-}D_j)$" being the volume percentage of grains having a circularity of less than 0.85 in the $D_i$-$D_j$ particle size fraction.

7. The suspension as claimed in any one of the preceding claims, wherein the $D_{20}$-$D_{40}$ particle size fraction comprises .more than 15%, as a volume percentage, of grains having a circularity of less than 0.85.

8. The suspension as claimed in any one of the preceding claims, wherein the $D_{10}$-$D_{20}$ particle size fraction comprises more than 15%, as a volume percentage, of grains having a circularity of less than 0.85.

9. The suspension as claimed in any one of the preceding claims, wherein the $D_3$-$D_{10}$ particle size fraction comprises more than 30% and/or the $D_{40}$-$D_{60}$ particle size fraction comprises less than 50%, as a volume percentage, of grains having a circularity of less than 0.85.

10. The suspension as claimed in any one of the preceding claims, wherein the median size $D_{50}$ is greater than 3 $\mu$m and/or less than 30 $\mu$m.

11. The suspension as claimed in any one of the preceding claims, wherein said abrasive grains are made of a material chosen from the group constituted by silicon carbide, cerium oxide, diamond, boron nitride, alumina, zirconia, silica and combinations of one or more of these materials.

12. The suspension as claimed in any one of the preceding claims, having a viscosity between 20 and 30 cPa.s, measured with a Brookfield DV-II+ Pro viscometer using spindle 63 and a rotational speed of 200 rpm.

13. An abrasive wire intended for sawing blocks, especially blocks of silicon, comprising abrasive grains fastened to a support or agglomerated with one another by means of a suspension as claimed in any one of the preceding claims.

14. A process for sawing a block based on silicon using an abrasive wire as claimed in the preceding claim, adapted so as to obtain, at the end of said sawing operation, a wafer having a thickness of less than 200 $\mu$m.

15. A process for machining an ingot, comprising the following operations:

   a. preparation of a suspension by mixing a powder of abrasive grains and a binder;
   b. machining of said ingot using an abrasive tool that is reloaded by passing through said suspension;

   **characterized in that**, for the preparation of said suspension, the weight content of abrasive grains in said suspension is adjusted as a function of the specific surface area of said powder, the suspension being as claimed in any one of claims 1 to 12.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 2006249134 A **[0003]**
- US 5937844 A **[0003]**
- WO 2005095076 A **[0003]**
- JP 10180608 A **[0007]**
- JP 2003041240 A **[0008] [0045] [0084]**
- US 20060249134 A **[0074]**

### Littérature non-brevet citée dans la description

- *Journal of American Chemical Society,* 1938, vol. 60, 309-316 **[0024]**